# EUROPEAN PATENT SPECIFICATION

(11) **EP 2 146 529 B1**
(45) Date of publication and mention of the grant of the patent: **12.12.2012**
(21) Application number: 09745386.4
(22) Date of filing: 02.04.2009
(51) Int. Cl.: H04W 4/12, H04Q 3/00

(54) **METHOD, SYSTEM AND APPARATUS FOR DROPPING BACK TO VOICE CALL FROM VIDEO CALL**
VERFAHREN, SYSTEM UND VORRICHTUNG ZUM RÜCKFALL EINES VIDEOANRUFS AUF EINEN SPRACHANRUF
PROCÉDÉ, SYSTÈME ET APPAREIL POUR REVENIR À UN APPEL VOCAL À PARTIR D'UN APPEL VIDÉO

(30) Priority: 13.05.2008 CN 200810097360
(43) Date of publication of application: 20.01.2010
(73) Proprietor: Huawei Technologies Co., Ltd., Longgang District, Shenzhen Guangdong 518129 (CN)
(72) Inventor: LI, Deqiang, Shenzhen Guangdong 518129 (CN); YU, Qian, Shenzhen Guangdong 518129 (CN)
(74) Representative: Pfenning, Meinig & Partner GbR
(86) International application number: PCT/CN2009/071140
(87) International publication number: WO 2009/138002

(56) References cited:
- EP-A1- 1 594 326
- EP-A1- 1 892 979
- WO-A1-2007/137615
- CN-A- 101 146 254
- CN-A- 101 287 163
- US-A1- 2008 057 917

## Description

### Field of the Invention

The present invention relates to the field of network communication technologies and in particular to a method, system and device for falling-back of a video call to a voice call.

### Background of the Invention

The Third Generation (3G) mobile communication is a network bearer technology capable of providing voice and data services available over the Second Generation (2G) mobile communication network. Typical services that can be provided over the 3G network include a video phone or visual phone service, a Push to talk over Cellular (POC) service, an Instant Message (IM) service and a stream service. Particularly, a video call is a 3G-specific service and can be supported by a 3G Mobile Switching Center (MSC), which can additionally perform a visual call function of multiple parties, the number of which ranges from three to five.

Services over an intelligent network are converged at a centrally located node, which is referred to as a Service Control Point (SCP). The SCP which stores and loads service data and service logics primarily functions to initiate a different service logic in response to a call event reported from the MSC/Service Switching Point (SSP) and to issue a call control instruction to the SSP according to the service logic to thereby implement various intelligent calls and intelligent services.

In the 3G network of the conventional art, if a calling user initiates a video call, the video call is connected to a called user by a network-side device, and if the calling user initiates a voice call, the voice call is connected to the called user by the network-side device. When the calling user initiates the video call, the video call is connected if the called user chooses manually to answer it via video, or the voice call is connected if the called user chooses manually to answer it via voice.

However, the inventors have identified the following drawbacks of the conventional art: in the 3G network environment of the conventional art, when the calling user initiates the video call, the network-side device can not connect to the called user via the video call due to some reasons, e.g., an insufficient account balance of the user, and hence can not perform a function of switching automatically the video call to the voice call for the purpose of connecting thereof.

when the called user answers the call via video, the network-side device can not connect via the video call due to some reasons, e.g., an insufficient account balance of the user, and hence can not perform the function of switching automatically the video call to the voice call for the purpose of connecting thereof.
WO 2007/137615 A1 discloses methods relating to service change and service fallback, and network nodes for controlling service change and service fallback in an intelligent network. The method comprises the steps of obtaining service preference information for at least one of two or more services, the service preference information indicating a preferred service for a user equipment: obtaining service availability information related to requited resources for at least one of the two or more services, selecting a service on the basis of the service preference information and the service availability information: and indicating the selected service for at least one of service change and service fallback.

### Summary of the Invention

Embodiments of the invention provide a method, system and device for falling-back of a video call to a voice call so as to cooperate with a network-side device to perform automatic falling-back of the video call to the voice call.

An embodiment of the invention provides a method for falling-back of a video call to a voice call, including:
setting in advance a condition of falling-back of a video call to a voice call on the network-side device;

receiving instruction information on falling-back of a video call to a voice call, which is issued from a network-side device; and

connecting a calling user and a called user via the voice call in response to the instruction information on falling-back of the video call to the voice call when the user meets a condition of falling-back of a video call to a voice call.

An embodiment of the invention further provides a system for falling-back of a video call to a voice call, including:

a network-side device adapted to issue instruction information on falling-back of a video call to a voice call, wherein a condition of falling-back of a video call to a voice call is set in advance on the network-side device; and

a mobile switching center adapted to receive the instruction information on falling-back of the video call to the voice call, which is issued from the network-side device, and to connect the call in response to the instruction information.

when a user meets a condition of falling-back of a video call to a voice call, the mobile switching center connects a calling user and a called user via the voice call in response to the instruction information of the network-side device.

An embodiment of the invention further provides a network-side device in which a condition of falling-back of a video call to a voice call is set in advance, including:

an instruction issuing module adapted to issue instruction information on falling-back of a video call to a voice call to a mobile switching center when a user satisfies a condition of falling-back of a video call to a voice call; and

a condition determination module adapted to determine whether the user meets the condition of falling-back of a video call to a voice call, and if so, to instruct the instruction issuing module to transmit the instruction information.

An embodiment of the invention further provides a mobile switching center, including:

an instruction receiving module adapted to receive instruction information on falling-back of a video call to a voice call, which is issued from a network-side device in which a condition of falling-back of a video call to a voice call is set in advance; and

a connecting module adapted to connect a calling user and a called user via the voice call in response to the instruction information on falling-back of the video call to the voice call, which is received by the instruction receiving module.

The technical solutions according to the embodiments of the invention set a condition of falling-back of a video call to a voice call on the network-side device, and when the user meets the condition of falling-back of a video call to a voice call, the mobile switching center receives instruction information on falling-back of a video call to a voice call, which is issued from the network-side device, and connects the calling user and the called user via the voice call in response to the instruction information on falling-back of the video call to the voice call, thereby performing a function of automatic falling-back of a video call to a voice call for the calling user and the called user. The technical solutions according to the embodiments of the invention require minor modifications to the network-side device and existing signaling and protocols and hence are convenient for practice.

### Brief Description of the Drawings

Fig.1 is a flow chart of a method for falling-back of a video call to a voice call according to embodiments of the invention;

Fig.2 is a flow chart of a method for falling-back of a video call to a voice call according to a first embodiment of the invention;

Fig.3 is a flow chart of a method for falling-back of a video call to a voice call according to a second embodiment of the invention;

Fig.4 is a flow chart of a method for falling-back of a video call to a voice call according to a third embodiment of the invention;

Fig.5 is a schematic diagram of a system for falling-back of a video call to a voice call according to an embodiment of the invention;

Fig.6 is a structural diagram of a network-side device according to an embodiment of the invention; and

Fig.7 is a structural diagram of a mobile switching center according to an embodiment of the invention.

### Detailed Description of the Invention

Embodiments of the invention provide a method for falling-back of a video call to a voice call, in which conditions of falling-back of a video call of a calling or called user to a voice call, for example, that a balance of the user is below a threshold (insufficient) or the user is in a roaming state (highly charged), are set on a network-side device, and when the calling or called user initiates a video call over a 3G network and the network-side device determines that the condition of falling-back of a video call to a voice call is satisfied, the network-side device cooperates with an MSC/Visitor Location Register (VLR)/SSP to perform automatic falling-back of the video call to a voice call. The embodiments of the invention will be described by way of an example in which the network-side device cooperates with an MSC to perform automatic falling-back of a video call to a voice call. The network-side device in the embodiments of the invention refers to an SCP or Home Location Register (HLR).

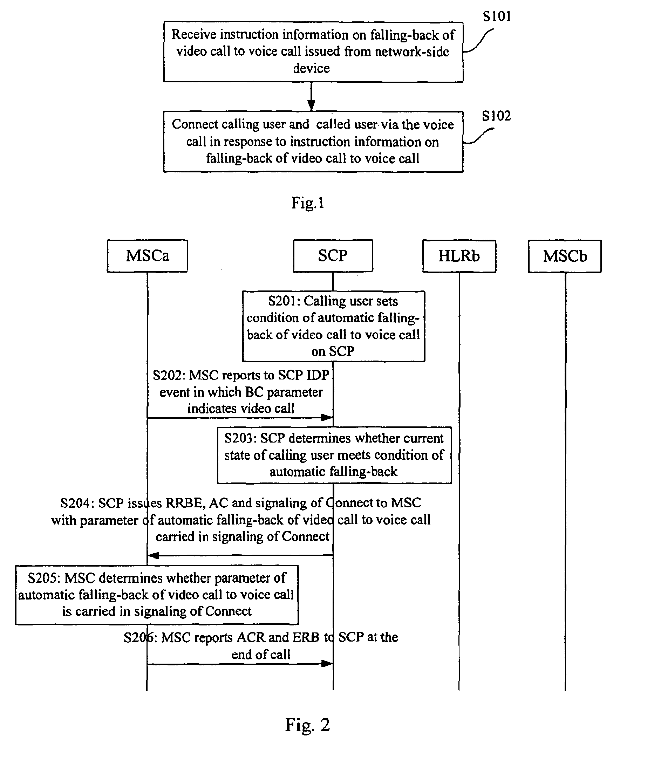

As illustrated in Fig.1, the method for falling-back of a video call to a voice call according to the embodiments of the invention particularly includes the following steps:

Step S101. When the user meets a preset condition of falling-back of a video call to a voice call, the mobile switching center receives instruction information on falling-back of a video call to a voice call, which is issued from the network-side device.

In the embodiments of the invention, the user sets the condition of falling-back of a video call to a voice call on the network-side device in any way of Interactive Voice Response (IVR), Short Messaging Service (SMS), Unstructured Supplementary Service Data (USSD) and Web or by a human operator. The condition of falling-back of a video call to a voice call can particularly be such that the user is in a roaming state or a balance of the user is below a preset threshold.

When the network-side device determines that the user meets the condition of falling-back of a video call to a voice call, the network-side device issues the instruction information on falling-back of the video call to the voice call to the mobile switching center.

Furthermore, when the network-side device is an SCP, the instruction information on falling-back of the video call to the voice call, which is issued from the network-side device to the mobile switching center, is carried in signaling of Connect; or

When the network-side device is an HLR, the instruction information on falling-back of the video call to the voice call, which is issued from the network-side device to the mobile switching center, is carried in signaling of Send Routing Information (SRI).

Step S102. The mobile switching center connects the calling user and the called user via the voice call in response to the instruction information on falling-back of the video call to the voice call.

When the network-side device is an HLR and the user is a called user, the connecting between the calling user and the called user via the voice call in response to the instruction information on falling-back of the video call to the voice call is particularly as follows:

When the called user is a non-subscriber, the mobile switching center connects the calling user and the called user via the voice call; or

When the called user is a subscriber, the mobile switching center reports an event of Initial Detection Point (IDP) to an SCP and receives signaling of Connect issued from the SCP, and connects the calling user and the called user via the voice call.

The above method for falling-back of a video call to a voice call sets a condition of falling-back of a video call to a voice call on the network-side device; when the user meets the preset condition of falling-back of a video call to a voice call, the network-side device issues instruction information on falling-back of a video call to a voice call to the mobile switching center, and the mobile switching center connects the calling user and the called user via the voice call in response to the instruction information on falling-back of the video call to the voice call, thereby performing a function of automatic falling-back of a video call to a voice call for the calling user and the called user. The embodiments of the invention require minor modifications to the network-side device and existing signaling and protocols and hence are convenient for practice.

As illustrated in Fig.2, in a method for falling-back of a video call to a voice call according to a first embodiment of the invention, an SCP cooperates with an MSC to perform automatic falling-back of a video call to a voice call for a calling user, and the method particularly includes the following steps:

Step S201. The calling user sets a condition of automatic falling-back of a video call to a voice call on the SCP. The calling user sets the condition of automatic falling-back of a video call to a voice call on the SCP in any way of Interactive Voice Response IVR, Short Messaging Service SMS, Unstructured Supplementary Service Data USSD and Web or by a human operator, for example, that a balance of the calling user is below a preset threshold (insufficient) or the calling user is in a roaming state (highly charged).

Step S202. The MSC reports an IDP event to the SCP.

In a 3G network, the calling user initiates a video call, and the MSC reports to the SCP an IDP event in which a parameter of Bear Capability (BC) indicates the video call.

Step S203. The SCP determines whether a current state of the calling user meets the condition of automatic falling-back. If the current state of the calling user meets the condition of automatic falling-back, for example, if the account balance of the calling user is below the preset threshold or the user is in a roaming state, the SCP goes to the step S204; or if the current state of the calling user does not satisfy the condition of automatic falling-back, the SCP continues connecting via the video call and continues a subsequent flow of the video call.

Step S204. The SCP issues a Request Report Basic Call State Model Event (RRBE), Apply Charging (AC) and signaling of Connect to the MSC with a parameter of automatic falling-back of a video call to a voice call carried in the signaling of Connect.

Step 205. The MSC determines whether a parameter of automatic falling-back of a video call to a voice call is carried in the signaling of Connect, and if a parameter of automatic falling-back of a video call to a voice call is carried in the signaling of Connect, then the MSC connects via a voice call and executing the step S206; or if no parameter of automatic falling-back of a video call to a voice call is carried in the signaling of Connect, the MSC continues connecting via the video call and continues a subsequent flow of the video call.

Step S206. The MSC reports an Apply Charging Report (ACR) and an Event Basic Call State Model Report (ERB) to the SCP at the end of the call, and the SCP charges the user for the voice call.

In the above method for falling-back of a video call to a voice call, the SCP cooperates with the MSC to perform a function of automatic falling-back of a video call to a voice call for the calling user without any newly added signaling or protocol, and the automatic falling-back of a video call to a voice call can be performed simply by extending or modifying or redefining a parameter over the signaling of Connect in the existing protocol of Customized Application for Mobile Network Enhanced Logic Application Part (CAP). Minor modifications at both sides of SCP and MSC facilitate rapid deployment of a new service based upon automatic falling-back of a video call to a voice call.

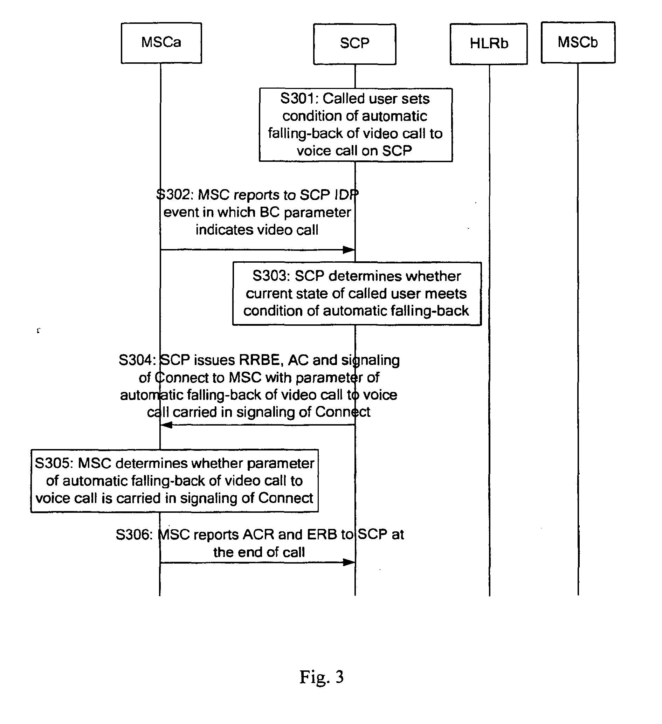

As illustrated in Fig.3, in a method for falling-back of a video call to a voice call according to a second embodiment of the invention, an SCP cooperates with an MSC to perform automatic falling-back of a video call to a voice call for a called user, and the method particularly includes the following steps:

Step S301. The called user sets a condition of automatic falling-back of a video call to a voice call on the SCP. The called user sets the condition of automatic falling-back of a video call to a voice call on the SCP in any way of IVR, SMS, USSD and Web or by a human operator, for example, that a balance of the called user is below a preset threshold or the called user is in a roaming state

Step S302. The MSC reports an IDP event to the SCP.

In a 3G network, the called user chooses to answer a call via video, and the MSC reports to the SCP an IDP event in which a BC parameter indicates the video call.

Step S303. The SCP determines whether a current state of the called user meets the condition of automatic falling-back.

If the current state of the called user meets the condition of automatic falling-back, for example, if the account balance of the called user is below the preset threshold or the called user is in a roaming state, the SCP goes to the step S304; or if the current state of the called user does not satisfy the condition of automatic falling-back, then the SCP continues connecting via the video call and continues a subsequent flow of the video call.

Step S304. The SCP issues an RRBE, AC and signaling of Connect to the MSC with a parameter of automatic falling-back of a video call to a voice call carried in the signaling of Connect.

Step 305. The MSC determines whether a parameter of automatic falling-back of a video call to a voice call is carried in the signaling of Connect, and if a parameter of automatic falling-back of a video call to a voice call is carried in the signaling of Connect, the MSC connects via a voice call and executing the step S206; or if no parameter of automatic falling-back of a video call to a voice call is carried in the signaling of Connect, the MSC continues connecting via the video call and continues a subsequent flow of the video call.

Step S306. The MSC reports an ACR and an ERB to the SCP at the end of the call, and the SCP charges the user for the voice call.

In the above method for falling-back of a video call to a voice call, the SCP cooperates with the MSC to perform a function of automatic falling-back of a video call to a voice call for the called user without any newly added signaling or protocol, and the automatic falling-back of a video call to a voice call can be performed simply by extending or modifying or redefining a parameter over the signaling of Connect in the existing CAP protocol. Minor modifications at both sides of SCP and MSC facilitate rapid deployment of a new service based upon automatic falling-back of a video call to a voice call.

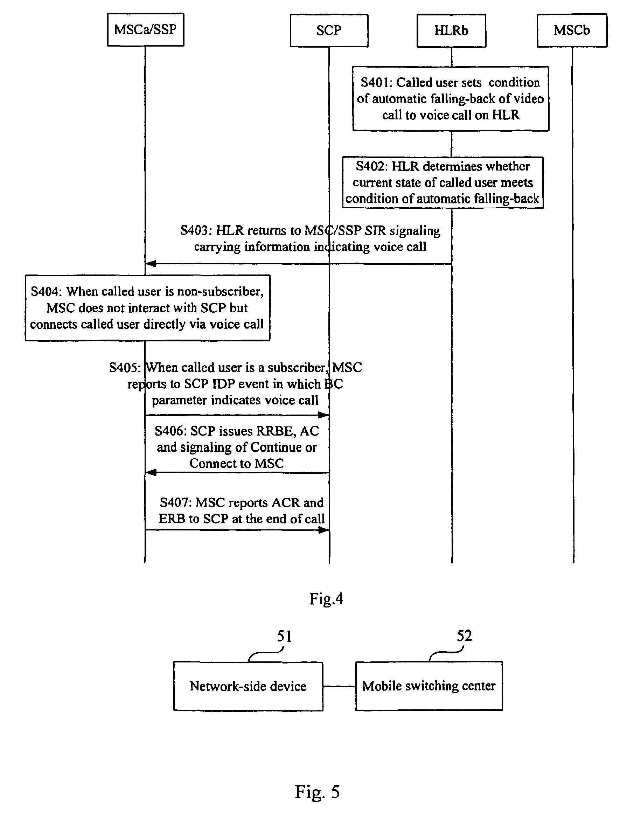

As illustrated in Fig.4, in a method for falling-back of a video call to a voice call according to a third embodiment of the invention, an HLR performs automatic falling-back of a video call to a voice call for a called user, and the method particularly includes the following steps:

Step S401. The called user sets on the HLR a condition of automatic falling-back of a video call to a voice call in any way of USSD, SMS, IVR and Web or by a human operator, for example, that the called user is in a roaming state.

Step S402. The HLR determines whether a current state of the called user meets the condition of automatic falling-back. In a 3G network, when the called user chooses to answer a call via video, the HLR determines whether a current state of the called user meets the condition of automatic falling-back, and if the current state of the called user meets the condition of automatic falling-back, for example, if the called user is in a roaming state, the HLR goes to the step S403; or if the current state of the called user does not satisfy the condition of automatic falling-back, the HLR continues connecting via the video call and continues a subsequent flow of the video call.

Step S403. The HLR returns SIR signaling carrying information indicating a voice call to an MSC/SSP.

Step S404. When the called user is a non-subscriber, the MSC does not interact with the SCP but connects the called user directly via the voice call and ends the flow.

Step S405. When the called user is a subscriber, the MSC reports to the SCP an IDP event in which a Bearer Capability BC parameter indicates the voice call.

Step S406. The SCP issues an RRBE, AC and signaling of Continue or Connection to the MSC and connects via the voice call.

Step 407. The MSC reports an ACR and an ERB to the SCP at the end of the call, and the SCP charges the user for the voice call.

In the above method for falling-back of a video call to a voice call, the HLR performs a function of automatic falling-back of a video call to a voice call for the called user without any modification to signaling and protocols or any adaptive modification to the MSC and the SCP, and rapid deployment of a new service based upon automatic falling-back of a video call to a voice call can be accomplished simply by modifying a service logic on the HLR.

As illustrated in Fig.5, a system for falling-back of a video call to a voice call according to an embodiment of the invention includes:
a network-side device 51 adapted to issue instruction information on falling-back of a video call to a voice call when the user meets a condition of falling-back of a video call to a voice call; and
a mobile switching center 52 adapted to receive the instruction information on falling-back of the video call to the voice call, which is issued from the network-side device 51, and to connect the calling user and the called user via the voice call in response to the instruction information.

The above system for falling-back of a video call to a voice call sets a condition of falling-back of a video call to a voice call on the network-side device 51; when the user meets the preset condition of falling-back of a video call to a voice call, the network-side device 51 issues instruction information on falling-back of a video call to a voice call to the mobile switching center 52, and the mobile switching center 52 connects the calling user and the called user via the voice call in response to the instruction information on falling-back of the video call to the voice call, thereby performing a function of automatic falling-back of a video call to a voice call for the calling user and the called user. The embodiments of the invention require minor modifications to the network-side device 51 and existing signaling and protocols and hence are convenient for practice.

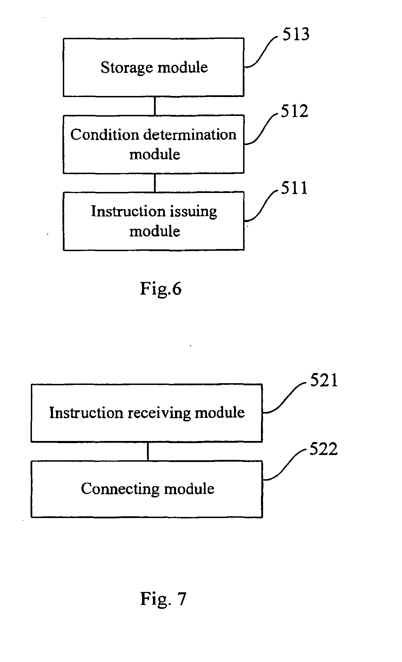

As illustrated in Fig.6, the network-side device 51 according to an embodiment of the invention includes an instruction issuing module 511 and a condition determination module 512.

The instruction issuing module 511 is adapted to issue instruction information on falling-back of a video call to a voice call to the mobile switching center 52 when the user meets a condition of falling-back of a video call to a voice call. When the network-side device 51 is an SCP, the instruction information on falling-back of the video call to the voice call, which is issued from the network-side device 51 to the mobile switching center 52, is carried in signaling of Connect; or when the network-side device 51 is an HLR, the instruction information on falling-back of the video call to the voice call, which is issued from the network-side device 51 to the mobile switching center 52, is carried in signaling of SRI.

The condition determination module 512 is adapted to determine whether the user meets the condition of falling-back of a video call to a voice call, and if so, to instruct the instruction issuing module 511 to transmit the instruction information on falling-back of the video call to the voice call.

Particularly, the network-side device 51 may further include:
a storage module 513 adapted to store the condition of falling-back of a video call to a voice call, which is set by the user on the network-side device 51.

In the network-side device 51, when the user meets the preset condition of falling-back of a video call to a voice call, the instruction issuing module 511 issues the instruction information on falling-back of the video call to the voice call to the mobile switching center 52 to instruct the mobile switching center 52 to connect the calling user and the called user via the voice call in response to the instruction information on falling-back of the video call to the voice call to thereby perform a function of automatic falling-back of a video call to a voice call for the calling user and the called user. The embodiments of the invention require minor modifications to the network-side device 51 and existing signaling and protocols and hence are convenient for practice.

As illustrated in Fig.7, the mobile switching center 52 according to an embodiment of the invention includes:
an instruction receiving module 521 adapted to receive the instruction information on falling-back of the video call to the voice call, which is issued from the network-side device 51; and
a connecting module 522 adapted to connect the calling user and the called user via the voice call in response to the instruction information on falling-back of the video call to the voice call, which is received by the instruction receiving module 521.

Particularly, the connecting module 522 can particularly be a voice call connecting module adapted, when the network-side device 51 is an HLR and the called user is a non-subscriber, to connect the calling user and the called user via the voice call; or when the network-side device 51 is the HLR and the called user is a subscriber, to report an IDP event to an SCP, to receive signaling of Connect issued from the SCP, and to connect the calling user and the called user via the voice call

In the mobile switching center 52, the connecting module 522 connects the calling user and the called user via the voice call in response to the instruction information on falling-back of the video call to the voice call carried in the instruction information received by the instruction receiving module 521 to thereby perform a function of automatic falling-back of a video call to a voice call for the calling user and the called user, and require minor modifications to the existing signaling and protocols and are convenient for practice.

The above modules can be distributed in one or more devices. The above modules can be integrated into a module or further divided into a plurality of sub-modules.

From the foregoing descriptions of the embodiments, those skilled in the art can appreciate clearly that the invention can be implemented in hardware or in software plus a necessary general purpose hardware platform. In light of this, the technical solutions of the invention can be embodied in the form of a software product, which can be stored in a nonvolatile storage medium (which may be a CD-ROM, a U-disk, a removable hard disk, etc.) and which includes several instructions to make a computer device (which may be a personal computer, a server, a network device, etc.) perform the methods according to the respective embodiments.

Those skilled in the art can appreciate that the drawings are merely schematic diagrams of a preferred embodiment and the modules or flows in the drawings may not be necessary for an implementation of the invention.

Those skilled in the art can appreciate that the modules in the device according to the embodiments can be distributed in the device as described in the embodiments, also can be varied correspondingly to be located in one or more devices other than that according to the embodiments. The modules according to the embodiments can be integrated into a module or further divided into a plurality of sub-modules.

The above embodiments of the invention have been numbered merely for the purpose of descriptions thereof instead of indicating superiority or inferiority thereof.

The foregoing descriptions are merely illustrative of the several embodiments of the invention, but the invention will not be limited thereto, and any variations that can occur to those skilled in the art shall fall into the scope of the invention, which is defined by the appended claims.

## Claims

1. A method for falling-back of a video call to a voice call, comprising:
setting in advance a condition of falling-back of a video call to a voice call on the network-side device;
receiving instruction information on falling-back of a video call to a voice call, which is issued from a network-side device (51); and
connecting a calling user and a called user via the voice call in response to the instruction information on falling-back of the video call to the voice call when a user meets the condition of falling-back of a video call to a voice call.

2. The method for falling-back of a video call to a voice call according to claim 1, wherein setting the condition of falling-back of a video call to a voice call on the network-side device (51) comprises:
setting the condition of automatic falling-back of a video call to a voice call on the network-side device (51) in any way of Interactive Voice Response IVR, Short Messaging Service SMS, an Unstructured Supplementary Service Data USSD and Web or by a human operator.

3. The method for falling-back of a video call to a voice call according to any one of claims 1 to 2, wherein when the network-side device (51) is a Service Control Point, SCP, the instruction information on falling-back of the video call to the voice call is carried in signaling of Connect; or
when the network-side device (51) is a Home Location Register, HLR, the instruction information on falling-back of the video call to the voice call is carried in signaling of SRI.

4. The method for falling-back of a video call to a voice call according to claim 3, wherein when the network-side device (51) is an HLR and the user is a called user, connecting the calling user and the called user via the voice call in response to the instruction information on falling-back of the video call to the voice call comprises:
when the called user is a non-subscriber, the mobile switching center (52) connects the calling user and the called user via the voice call; and
when the called user is a subscriber, the mobile switching center (52) reports an Initial Detection Point, IDP, event to the SCP, receives the signaling of Connect issued from the SCP, and connects the calling user and the called user via the voice call.

5. The method for falling-back of a video call to a voice call according to any one of claims 1 to 2, wherein the condition of falling-back of a video call to a voice call comprises:
that the user is in a roaming state or that a balance of the user is below a preset threshold.

6. A system for falling-back of a video call to a voice call, comprising:
a network-side device (51) adapted to issue instruction information on falling-back of a video call to a voice call, wherein a condition of falling-back of a video call to a voice call is set in advance on the network-side device (51); and
a mobile switching center (52) adapted to receive the instruction information on falling-back of the video call to the voice call, which is issued from the network-side device (51), and to connect the call in response to the instruction information,
when a user meets the condition of falling-back of a video call to a voice call, the mobile switching center (52) connects a calling user and a called user via the voice call in response to the instruction information of the network-side device (51).

7. A network-side device (51) in which a condition of falling-back of a video call to a voice call is set in advance, comprising:
an instruction issuing module (511) adapted to issue instruction information on falling-back of a video call to a voice call to a mobile switching center (52) when a user meets the condition of falling-back of a video call to a voice call; and
a condition determination module (512) adapted to determine whether the user meets the condition of falling-back of a video call to a voice call, and if so, to instruct the instruction issuing module (511) to transmit the instruction information.

8. The network-side device (51) according to claim 7, further comprising:
a storage module (513) adapted to store the condition of falling-back of a video call to a voice call, which is set by the user on the network-side device (51).

9. A mobile switching center (52), comprising:
an instruction receiving module (521) adapted to receive instruction information on falling-back of a video call to a voice call, which is issued from a network-side device (51) in which a condition of falling-back of a video call to a voice call is set in advance; and
a connecting module (522) adapted to connect a calling user and a called user via the voice call in response to the instruction information on falling-back of the video call to the voice call, which is received by the instruction receiving module (521).

10. The mobile switching center (52) according to claim 9, wherein the connecting module (522) is a voice call connecting module adapted to connect the calling user and the called user via the voice call; when the network-side device (51) is an HLR and the called user is a subscriber, to report an Initial Detection Point, IDP, event to an SCP, to receive signaling of Connect issued from the SCP, and to connect the calling user and the called user via the voice call.

## Patentansprüche

1. Verfahren zum Zurückstufen eines Videoanrufs zu einem Sprachanruf, das Folgendes umfasst:
im Voraus Einstellen einer Bedingung zum Zurückstufen eines Videoanrufs zu einem Sprachanruf bei der netzseitigen Vorrichtung;
Empfangen von Befehlsinformationen über die Zurückstufung eines Videoanrufs zu einem Sprachanruf, die von einer netzseitigen Vorrichtung (51) ausgegeben werden; und
Verbinden eines anrufenden Anwenders und eines angerufenen Anwenders über den Sprachanruf als Reaktion auf die Befehlsinformationen über die Zurückstufung des Videoanrufs zu dem Sprachanruf, wenn ein Anwender die Bedingung des Zurückstufens eines Videoanrufs zu einem Sprachanruf erfüllt.

2. Verfahren zum Zurückstufen eines Videoanrufs zu einem Sprachanruf nach Anspruch 1, wobei das Einstellen der Bedingung des Zurückstufens eines Videoanrufs zu einem Sprachanruf bei der netzseitigen Vorrichtung (51) Folgendes umfasst: Einstellen der Bedingung einer automatischen Zurückstufung eines Videoanrufs zu einem Sprachanruf bei der netzseitigen Vorrichtung (51) auf eine der folgenden Weisen: interaktive Sprachantwort IVR, Kurznachrichtendienst SMS, unstrukturierte Zusatzdienstdaten USSD, Web oder durch eine menschliche Bedienungsperson.

3. Verfahren zum Zurückstufen eines Videoanrufs zu einem Sprachanruf nach einem der Ansprüche 1 bis 2, wobei dann, wenn die netzseitige Vorrichtung (51) ein Dienststeuerpunkt, SCP, ist, die Befehlsinformationen über die Zurückstufung des Videoanrufs zu dem Sprachanruf in einer Connect-Signalgebung geführt werden; oder
dann, wenn die netzseitige Vorrichtung (51) ein Heimatortsregister, HLR, ist, die Befehlsinformationen über die Zurückstufung des Videoanrufs zu dem Sprachanruf in der Signalgebung von SRI geführt werden.

4. Verfahren zum Zurückstufen eines Videoanrufs zu einem Sprachanruf nach Anspruch 3, wobei dann, wenn die netzseitige Vorrichtung (51) ein HLR ist und der Anwender ein angerufener Anwender ist, das Verbinden des anrufenden Anwenders und des angerufenen Anwenders über den Sprachanruf als Reaktion auf die Befehlsinformationen über die Zurückstufung des Videoanrufs zu dem Sprachanruf Folgendes umfasst:
wenn der angerufene Anwender ein Nichtteilnehmer ist, Verbinden des anrufenden Anwenders mit dem angerufenen Anwender über den Sprachanruf durch die Mobilvermittlungszentrale (52); und
dann, wenn der angerufene Anwender ein Teilnehmer ist, durch die Mobilvermittlungszentrale (52) Berichten eines Ereignisses eines anfänglichen Detektionspunkts, IDP-Ereignis, an den SCP, Empfangen der Connect-Signalgebung, die von dem SCP ausgegeben wird, und Verbinden des anrufenden Anwenders mit dem angerufenen Anwender über den Sprachanruf.

5. Verfahren zum Zurückstufen eines Videoanrufs zu einem Sprachanruf nach einem der Ansprüche 1 bis 2, wobei die Bedingung des Zurückstufens eines Videoanrufs zu einem Sprachanruf Folgendes umfasst:
der Anwender befindet sich in einem Roaming-Zustand oder ein Kontostand des Anwenders liegt unter einem im Voraus festgelegten Schwellenwert.

6. System zum Zurückstufen eines Videoanrufs zu einem Sprachanruf, das Folgendes umfasst:
eine netzseitige Vorrichtung (51), die dafür ausgelegt ist, Befehlsinformationen über das Zurückstufen eines Videoanrufs zu einem Sprachanruf auszugeben, wobei eine Bedingung für das Zurückstufen eines Videoanrufs zu einem Sprachanruf im Voraus bei der netzseitigen Vorrichtung (51) eingestellt wird; und
eine Mobilvermittlungszentrale (52), die dafür ausgelegt ist, die Befehlsinformationen über das Zurückstufen des Videoanrufs zu dem Sprachanruf, die von der netzseitigen Vorrichtung (51) ausgegeben werden, zu empfangen und den Anruf als Reaktion auf die Befehlsinformationen zu verbinden,
wobei dann, wenn ein Anwender die Bedingung für das Zurückstufen eines Videoanrufs zu einem Sprachanruf erfüllt, die Mobilvermittlungszentrale (52) einen anrufenden Anwender mit einem angerufenen Anwender über den Sprachanruf als Reaktion auf die Befehlsinformationen der netzseitigen Vorrichtung (51) verbindet.

7. Netzseitige Vorrichtung (51), in der eine Bedingung für das Zurückstufen eines Videoanrufs zu einem Sprachanruf im Voraus eingestellt wird, die Folgendes umfasst:
ein Befehlsausgabemodul (511), das dafür ausgelegt ist, Befehlsinformationen über das Zurückstufen eines Videoanrufs zu einem Sprachanruf zu einer Mobilvermittlungszentrale (52) auszugeben, wenn ein Anwender die Bedingung für das Zurückstufen eines Videoanrufs zu einem Sprachanruf verfüllt; und
ein Bedingungsbestimmungsmodul (512), das dafür ausgelegt ist, zu bestimmen, ob der Anwender die Bedingung für das Zurückstufen eines Videoanrufs zu einem Sprachanruf erfüllt, und wenn ja, das Befehlsausgabemodul (511) anzuweisen, die Befehlsinformationen zu senden.

8. Netzseitige Vorrichtung (51) nach Anspruch 7, die ferner Folgendes umfasst:
ein Speichermodul (513), das dafür ausgelegt ist, die Bedingung für das Zurückstufen eines Videoanrufs zu einem Sprachanruf zu speichern, die durch den Anwender bei der netzseitigen Vorrichtung (51) eingestellt wird.

9. Mobilvermittlungszentrale (52), die Folgendes umfasst:
ein Befehlsempfangsmodul (521), das dafür ausgelegt ist, Befehlsinformationen über das Zurückstufen eines Videoanrufs zu einem Sprachanruf, die von einer netzseitigen Vorrichtung (51) ausgegeben werden, in der eine Bedingung für das Zurückstufen eines Videoanrufs zu einem Sprachanruf im Voraus eingestellt wird, zu empfangen; und
ein Verbindungsmodul (522), das dafür ausgelegt ist, einen anrufenden Anwender und einen angerufenen Anwender über den Sprachanruf als Reaktion auf die Befehlsinformationen über das Zurückstufen des Videoanrufs zu dem Sprachanruf, die von dem Befehlsempfangsmodul (521) empfangen werden, zu verbinden.

10. Mobilvermittlungszentrale (52) nach Anspruch 9, wobei das Verbindungsmodul (522) ein Sprachanruf-Verbindungsmodul ist, das dafür ausgelegt ist, den anrufenden Anwender und den angerufenen Anwender über den Sprachanruf zu verbinden; dann, wenn die netzseitige Vorrichtung (51) ein HLR ist und der angerufene Anwender ein Teilnehmer ist, ein Ereignis eines anfänglichen Detektionspunkts, IDP-Ereignis, einem SCP zu berichten, um eine Connect-Signalgebung, die von dem SCP ausgegeben wird, zu empfangen; und den anrufenden Anwender und den angerufenen Anwender über den Sprachanruf zu verbinden.

## Revendications

1. Procédé de repli d'un appel vidéo sur un appel vocal, comprenant :
l'établissement à l'avance d'une condition de repli d'un appel vidéo sur un appel vocal sur le dispositif côté réseau ;
la réception d'informations d'instructions relatives au repli d'un appel vidéo sur un appel vocal, lesquelles sont délivrées par un dispositif côté réseau (51) ; et
la connexion d'un usager appelant et d'un usager appelé par l'intermédiaire de l'appel vocal en réponse aux informations d'instructions relatives au repli de l'appel vidéo sur l'appel vocal quand un usager satisfait à la condition de repli d'un appel vidéo sur un appel vocal.

2. Procédé de repli d'un appel vidéo sur un appel vocal selon la revendication 1, dans lequel l'établissement de la condition du repli d'un appel vidéo sur un appel vocal sur le dispositif côté réseau (51) comprend :
l'établissement de la condition de repli automatique d'un appel vidéo sur un appel vocal sur le dispositif côté réseau (51) selon une manière quelconque parmi une Réponse Vocale Interactive IVR, un Service de Messages Courts SMS, des Données de Service Supplémentaire Non Structurées USSD et le Web ou par un opérateur humain.

3. Procédé de repli d'un appel vidéo sur un appel vocal selon l'une quelconque des revendications 1 et 2, dans lequel quand le dispositif côté réseau (51) est un Point de Commande de Service, SCP, les informations d'instructions relatives au repli de l'appel vidéo sur l'appel vocal sont incluses dans une signalisation de Connexion ; ou quand le dispositif côté réseau (51) est un Enregistreur de Position de Rattachement, HLR, les informations d'instructions relatives au repli de l'appel vidéo sur l'appel vocal sont incluses dans une signalisation de SRI.

4. Procédé de repli d'un appel vidéo sur un appel vocal selon la revendication 3, dans lequel quand le dispositif côté réseau (51) est un HLR et l'usager est un usager appelé, la connexion de l'usager appelant et de l'usager appelé par l'intermédiaire de l'appel vocal en réponse aux informations d'instructions relatives au repli de l'appel vidéo sur l'appel vocal comprend :
quand l'usager appelé est un non abonné, la connexion par le centre de commutation de services mobiles (52) de l'usager appelant et de l'usager appelé par l'intermédiaire de l'appel vocal ; et
quand l'usager appelé est un abonné, la signalisation par le centre de commutation de services mobiles (52) d'un événement de Point de Détection Initial, IDP, au SCP, la réception de la signalisation de Connexion délivrée par le SCP, et la connexion de l'usager appelant et de l'usager appelé par l'intermédiaire de l'appel vocal.

5. Procédé de repli d'un appel vidéo sur un appel vocal selon l'une quelconque des revendications 1 et 2, dans lequel la condition de repli d'un appel vidéo sur un appel vocal comprend :
que l'usager soit en état d'itinérance ou qu'un crédit de l'usager soit en dessous d'un seuil préétabli.

6. Système de repli d'un appel vidéo sur un appel vocal, comprenant :
un dispositif côté réseau (51) adapté pour délivrer des informations d'instructions relatives au repli d'un appel vidéo sur un appel vocal, dans lequel une condition de repli d'un appel vidéo sur un appel vocal est établie à l'avance sur le dispositif côté réseau (51) ; et
un centre de commutation de services mobiles (52) adapté pour recevoir les informations d'instructions relatives au repli de l'appel vidéo sur l'appel vocal,
lesquelles sont délivrées par le dispositif côté réseau (51), et connecter l'appel en réponse aux informations d'instructions,
quand un usager satisfait à la condition de repli d'un appel vidéo sur un appel vocal , le centre de commutation de services mobiles (52) connecte un usager appelant et un usager appelé par l'intermédiaire de l'appel vocal en réponse aux informations d'instructions du dispositif côté réseau (51).

7. Dispositif côté réseau (51) dans lequel une condition de repli d'un appel vidéo sur un appel vocal est établie à l'avance, comprenant :
un module de délivrance d'instructions (511) adapté pour délivrer des informations d'instructions relatives au repli d'un appel vidéo sur un appel vocal à un centre de commutation de services mobiles (52) quand un usager satisfait à la condition de repli d'un appel vidéo sur un appel vocal ; et
un module de détermination de condition (512) adapté pour déterminer que l'usager satisfait ou non à la condition de repli d'un appel vidéo sur un appel vocal, et dans l'affirmative, ordonner au module de délivrance d'instructions (511) de transmettre des informations d'instructions.

8. Dispositif côté réseau (51) selon la revendication 7, comprenant en outre :
un module de mémorisation (513) adapté pour mémoriser la condition de repli d'un appel vidéo sur un appel vocal, laquelle est établie par l'usager sur le dispositif côté réseau (51).

9. Centre de commutation de services mobiles (52), comprenant :
un module de réception d'instructions (521), adapté pour recevoir des informations d'instructions relatives au repli d'un appel vidéo sur un appel vocal, lesquelles sont délivrées par un dispositif côté réseau (51) dans lequel une condition de repli d'un appel vidéo sur un appel vocal est établie à l'avance ; et
un module de connexion (522) adapté pour connecter un usager appelant et un usager appelé par l'intermédiaire de l'appel vocal en réponse aux informations d'instructions relatives au repli de l'appel vidéo sur l'appel vocal, lesquelles sont reçues par le module de réception d'instructions (521).

10. Centre de commutation de services mobiles (52) selon la revendication 9, dans lequel le module de connexion (522) est un module de connexion d'appel vocal adapté pour connecter l'usager appelant et l'usager appelé par l'intermédiaire de l'appel vocal, quand le dispositif côté réseau (51) est un HLR et l'usager appelé est un abonné, signaler un événement de Point de Détection Initial, IDP, à un SCP, recevoir une signalisation de Connexion délivrée par le SCP, et connecter l'usager appelant et l'usager appelé par l'intermédiaire de l'appel vocal.
